# EUROPÄISCHE PATENTSCHRIFT

(11) **EP 1 606 707 B1**
(45) Veröffentlichungstag und Bekanntmachung des Hinweises auf die Patenterteilung: **19.12.2007**
(21) Anmeldenummer: 04709612.8
(22) Anmeldetag: 10.02.2004
(51) Int. Cl.: G06F 9/45, G06F 9/44

(54) **VERFAHREN ZUR ERMITTLUNG VON ABWEICHUNGEN EINER ENDSYSTEM-NACHRICHT VON EINER REFERENZNACHRICHT**
METHOD FOR DETERMINING DEVIATIONS OF AN END-SYSTEM MESSAGE FROM A REFERENCE MESSAGE
PROCEDE PERMETTANT DE DETERMINER LES DIFFERENCES ENTRE UN MESSAGE DE SYSTEME D'EXTREMITE ET UN MESSAGE DE REFERENCE

(30) Priorität: 27.03.2003 DE 10313910
(43) Veröffentlichungstag der Anmeldung: 21.12.2005
(73) Patentinhaber: Rohde & Schwarz GmbH & Co. KG, 81671 München (DE)
(72) Erfinder: MICHL, Andreas, 81673 München (DE)
(74) Vertreter: Körfer, Thomas
(86) Internationale Anmeldenummer: PCT/EP2004/001225
(87) Internationale Veröffentlichungsnummer: WO 2004/086224

(56) Entgegenhaltungen:
- WO-A-02/08890
- CA-A- 2 255 047
- US-B1- 6 502 112

## Beschreibung

Die Erfindung betrifft ein Verfahren zur Ermittlung von Abweichungen einer in einem hierarchisch aufgebauten Endsystem einer Telekommunikationseinrichtung erzeugten modularen aufgebauten Endsystem-Nachricht von einer Referenznachricht.

Aus der DE 101 39 068 A1 ist es bekannt, für eine hierarchisch aufgebaute Befehlsstruktur eine Folge von Befehlen automatisch zu erzeugen. Hierzu wird zunächst ein vollständiger Satz möglicher Befehle erzeugt, indem sämtliche mögliche Verzweigungen durch die einzelnen Hierarchieebenen als einzelne Befehle gespeichert werden. Ein einzelner Befehle entspricht einem Weg von der höchsten bis zur niedrigsten Hierarchieebene. Die so erzeugten einzelnen Befehle werden dann in einer zufälligen Reihenfolge angeordnet, wobei auch Wiederholungen eines Einzelbefehls auftreten können.

Diese Folge von Einzelbefehlen wird dann beispielsweise einem Messgerät zugeführt, dass die Befehle nacheinander abarbeitet. Tritt während der Durchführung eines solchen Durchlaufs ein Fehler in dem System auf, so wird die gesamte Folge von Einzelbefehlen systematisch verkürzt, um so diejenigen Kette von Einzelbefehlen zu ermitteln, welche ursächlich für den Systemfehler ist. Die Abfolge der einzelnen Befehle ist rein zufällig, so dass die aufeinanderfolgend abgearbeiteten Befehle keinen Kausalzusammenhang aufweisen. Nach einem neuen Entwicklungsschritt des Messgeräts kann daher lediglich eine vollständige neue Befehlsfolge erzeugt werden, innerhalb derer wiederum eine Eingrenzung bis hin zu einer möglichen, kritischen Sequenz erfolgt.

Mit dem beschriebenen System ist daher nicht möglich, die Auswirkungen einer Änderung an dem System im Hinblick auf den Aufbau eines einzelnen Befehls zu ermitteln. Eine Analyse einer beispielsweise von einem nach dem OSI-Referenzmodell aufgebauten Endsystem zwischen den einzelnen Schichten verschickten Nachricht ist damit nicht möglich, da solche Nachrichten erst aufgrund einer vorangegangenen Abfolge von Nachrichten erzeugt werden.

Aus der CA 2,255,047 ist ein Verfahren zum Vergleich zwischen einem XML-File und einem modifizierten XML-File bekannt. Dabei werden zunächst beide Files eingelesen und von beiden die Struktur der Files mittels jeweils eines Parsers ermittelt. Diese Strukturen werden dann Element für Element miteinander verglichen und ein Ergebnisfile wird erzeugt, in dem die Abweichungen der Strukturen der beiden verglichenen Files angegeben ist.

Aus der WO 02/08890 A2 ist ein Verfahren sowie eine Software bekannt, bei dem ebenfalls unterschiedliche Versionen eines XML-Files ermittelt werden. Für die ermittelten Unterschiede zwischen den beiden XML-Files wird zudem eine Überprüfung der Zulässigkeit der Strukturen anhand einer DTD (document type declaration) durchgeführt. Beim Vergleich der Files miteinander wird schrittweise ausgehend von einem Wurzel-Strukturelement jedes Strukturelement der beiden Files miteinander verglichen.

Aus der WO 99/57839 ist die Verwendung von XML-Nachrichten zur Steuerung von Geräten innerhalb eines Netzwerks bekannt. Zum Analysieren der Strukturen der XML-Nachrichten verfügt jedes der Geräte des Netzwerks über einen Parser, mit dem die Nachrichten validiert werden können.

Aus der US 2001/0049743 A1 ist ein Messaging-System bekannt. Die über das System versendeten Nachrichten werden in einer Log-Datei gespeichert. Aus diesen aufgezeichneten Daten wird durch einen Analysator eine statistische Auswertung durchgeführt.

Es ist die Aufgabe der Erfindung, auch für komplexe Strukturen eine benutzerfreundliche Analyse zu ermöglichen.

Die Aufgabe wird durch das erfindungsgemäße Verfahren nach Anspruch 1 gelöst. Die Ansprüche 8 und 9 betreffen ein entsprechendes Computerprogramm bzw. ein Computerprogrammprodukt.

Bei dem erfindungsgemäßen Verfahren werden Abweichungen einer Endsystem-Nachricht von einer Referenznachricht ermittelt. Die modular aufgebauten Nachrichten weisen eine bestimmte Struktur auf. Zum Ermitteln der Abweichungen der Endsystem-Nachricht wird daher zunächst für die Referenznachricht eine Nachrichtenstrukturanalyse durchgeführt, in der für die Referenznachricht die zugrundeliegende Struktur analysiert wird.

Für die Endsystem-Nachricht, deren Übereinstimmung bzw. Abweichung gegenüber der Referenznachricht ermittelt werden soll, wird ebenfalls eine Nachrichtenstrukturanalyse durchgeführt.

In der Referenznachricht und in der Endsystemnachricht wird eine beliebige Struktureinheit markiert. Zwischen dem markierten Teil der Endsystemnachricht und dem markierten Teil der Referenznachricht werden Abweichungen ermittelt. Solche Abweichungen können dabei einerseits den reinen Inhalt einer bestimmten

Struktureinheit, z. B. einen mit einem bestimmten alphanumerischen Wert besetzten Parameter, oder aber generell die Struktur der Nachricht betreffen. Dies liegt beispielsweise dann vor, wenn in einer bestimmten Struktureinheit die darin enthaltenen, untergeordneten Struktureinheiten von einem anderen Typ sind, als diejenigen untergeordneten Struktureinheiten der entsprechenden bestimmten Struktureinheiten der Referenznachricht. Die so ermittelten Abweichungen von Struktureinheiten der Endsystem-Nachricht von der Referenznachricht werden schließlich ausgegeben.

Die Ausgabe der so ermittelten Abweichungen erfolgt in einem ersten Bereich einer Bildschirmdarstellung. Zusätzlich werden in einem zweiten Bereich bzw. einem dritten Bereich die Struktureinheiten der Endsystemnachricht bzw. einer Referenznachricht mit einer Angabe von Details für sämtliche Struktureinheiten der Endsystemnachricht in Form einer Tabelle dargestellt.

Dabei werden in dem zweiten bzw. in dem dritten Bereich jeweils das einer Struktureinheit zugeordnete Byte innerhalb der Endsystemnachricht bzw. der Referenznachricht angegeben.

In den Unteransprüchen sind vorteilhafte Weiterbildungen des erfindungsgemäßen Verfahrens ausgeführt.

Insbesondere ist es vorteilhaft, neben den tatsächlich abweichenden Struktureinheiten der Endayatem-Nachricht von der Referenznachricht auch diejenigen Struktureinheiten auszugeben, welche Übereinstimmend in der Endsystem-Nachricht und der Referenznachricht enthalten sind. Übereinstimmende Struktureinheiten sind dabei jene Struktureinheiten, welche in der Endsystem-Nachricht und der Referenznachricht in identischer Form vorliegen, das heißt sowohl denselben Typ und Inhalt aufweisen als auch hinsichtlich der Struktur der Nachricht übereinstimmend angeordnet sind, wobei die Nachricht auch ein Teil einer Gesamtnachricht sein kann, der aus zumindest einer Struktureinheit mit sämtlichen dieser Struktureinheit untergeordneten Struktureinheiten besteht. Die übereinstimmenden Struktureinheiten und die voneinander abweichenden Struktureinheiten werden grafisch unterscheidbar dargestellt, so dass zur genaueren Analyse der Abweichungen einerseits die abweichende Struktureinheit unmittelbar erkennbar ist und andererseits auch der Gesamtzusammenhang der abweichenden Struktureinheit innerhalb des modularen Aufbaus der Endsystem-Nachricht erhalten bleibt. Ein weiterer Vorteil ist es, dass neben den übereinstimmenden bzw. abweichenden Struktureinheiten auch diejenigen Struktureinheiten der Referenznachricht dargestellt werden, welche in der zu analysierenden Endsystem-Nachricht nicht enthalten sind. Werden beispielsweise bei der in dem Endsystem der Telekommunikationseinrichtung erzeugten und zwischen den verschiedenen Schichten nach dem OSI-Referenzinodell versandten Endsystem-Nachricht Struktureinheiten, welche in der Referenznachricht vorhanden sind, durch Struktureinheiten eines anderen Typs ersetzt, so ist dies wiederum durch eine grafisch unterscheidbare Darstellung unmittelbar erkennbar. Daher ist es beispielsweise möglich, aus einer nach einer Weiterentwicklung des Endsystems ausgelesenen Testsequenz, eine bestimmte Endsystem-Nachricht, oder einen Teil davon, gegenüber einer Referenznachricht auf Abweichungen zu untersuchen, wobei die Referenznachricht z.B. die erwartete Nachricht des Endsystems darstellt. Mit dem erfindungsgemäßen Verfahren lassen sich daher die Auswirkungen von Änderungen an dem Endsystem in einfacher Weise ermitteln.

Gemäß einer weiteren vorteilhaften Ausführung werden die einzelnen Struktureinheiten der Endsystem-Nachricht bzw. der Referenznachricht in einem separaten Bereich einer Bildschirmansicht dargestellt. In dieser Darstellung können z. B. auch diejenigen Details, die den Inhalt der jeweiligen Struktureinheit betreffen, detailliert dargestellt werden. Die abweichenden bzw. übereinstimmenden Struktureinheiten werden dabei wiederum vorteilhaft in grafisch unterscheidbarer Weise dargestellt.

Besonders vorteilhaft ist es auch, die jeweils dargestellten Struktureinheiten hinsichtlich ihres modularen Aufbaus so darzustellen, dass der Zusammenhang zwischen hierarchisch übergeordneten und untergeordneten Struktureinheiten und damit der gesamte hierarchische Aufbau einer Nachricht erkennbar ist. Diese Darstellung der Struktureinheiten der Nachricht entsprechend dem modularen Aufbau kann beispielsweise durch Einrücken jeweils untergeordneter Struktureinheiten erfolgen.

Ein bevorzugtes Ausführungsbeispiel des erfindungsgemäßen Verfahrens wird anhand der Zeichnung nachfolgend erläutert. Es zeigen:
- Fig. 1: eine schematische Darstellung zur Erläuterung des modularen Aufbaus von Nachrichten,
- Fig. 2: eine zeitliche Abfolge mehrerer kausal miteinander verknüpfter Nachrichten eines Endsystems,
- Fig. 3: ein Beispiel zur Gewinnung einer Referenznachricht,
- Fig. 4: ein Beispiel zur Gewinnung einer Endsystem-Nachricht und
- Fig. 5: eine bevorzugte Ausgabe der ermittelten Abweichungen einer Endsystem-Nachricht.

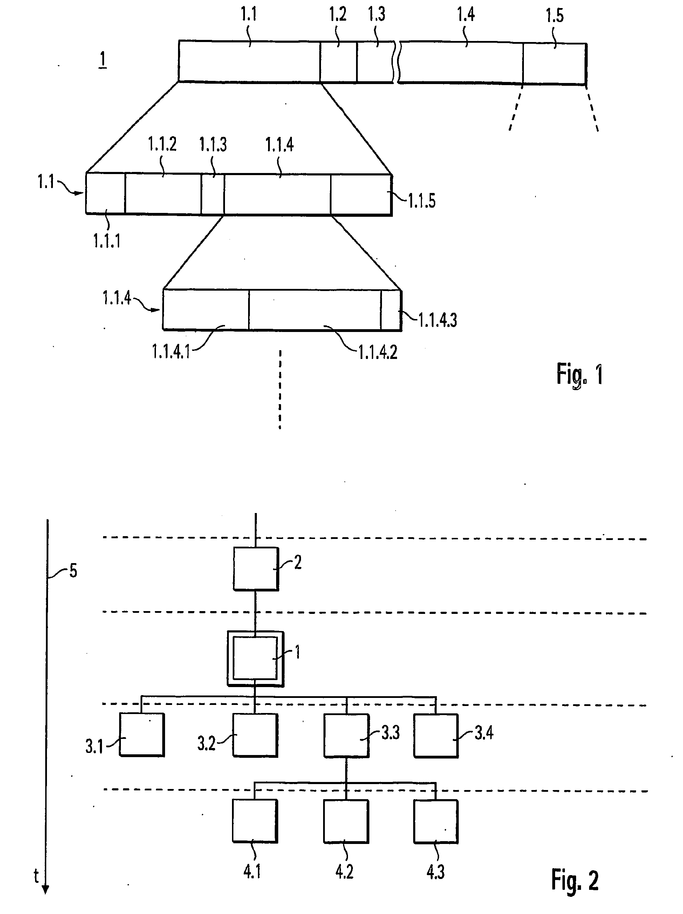

Bevor das erfindungsgemäße Verfahren zur Ermittlung von Abweichungen einer in einem hierarchisch aufgebauten Endsystem einer Telekommunikationseinrichtung erzeugten modular aufgebauten Endsystem-Nachricht von einer Referenznachricht näher erläutert wird, soll zunächst anhand der Figuren 1 und 2 die Struktur einer modular aufgebauten Nachricht beispielhaft erläutert werden.

In Fig. 1 ist eine Nachricht 1 gezeigt, wie sie beispielsweise bei der Diensterbringung durch eine der Schichten nach dem OSI-Referenzmodell verwendet wird. Die Nachricht 1 besteht aus mehreren Segmenten, die in Fig. 1 mit 1.1, 1.2, 1.3, 1.4 und 1.5 bezeichnet werden. Für das erste Segment 1.1 ist eine weitere Aufsplittung in Blöcke 1.1.1, 1.1.2, 1.1.3, 1.1.4 und 1.1.5 dargestellt. Die übrigen Segmente der Nachricht 1 können ebenfalls in solche Blöcke aufgeteilt sein. Die einzelnen Blöcke des Segments 1.1 können wiederum in kleinere Einheiten 1.1.4.1, 1.1.4.2, und 1.1.4.3 aufgegliedert werden. Aufgrund der dargestellten Aufgliederung in immer kleinere Struktureinheiten entsteht ein hierarchisches System der Nachricht 1, das deren modularen Aufbau bzw. seine Struktur widerspiegelt. Die Nachrichten 1 stellen beispielsweise Elemente eines Datenstrom dar, der zwischen den verschiedenen Schichten nach dem OSI-Referenzmodell einer Basisstation oder einer Mobilfunkstation als Endsystem in einer Telekommunikationseinrichtung ausgetauscht wird.

In Fig. 2 ist ausgehend von einer bestimmten Nachricht 1 ein Nachrichtenfluss über mehrere Generationen dargestellt. Der Nachricht 1 ist eine weitere Nachricht 2 einer Elterngeneration vorausgegangenen. Die Nachricht 1 selbst ist auf Grund des Inhalts der weiteren Nachricht 2 der Elterngeneration ausgelöst worden. Wie durch die Verbindungslinien dargestellt ist, ist die Nachricht 1 wiederum die Ursache für die Auslösung weiterer Nachrichten 3.1, 3.2, 3.3 und 3.4, welche einer Kindgeneration angehören. Die Nachrichten 3.1 bis 3.4 der Kindgeneration können ihrerseits wiederum ursächlich verantwortlich sein für das Auslösen weiterer Nachrichten 4.1, 4.2 und 4.3, wie dies beispielhaft für die Nachricht 3.3 der Kindgeneration dargestellt ist. Die einzelnen in der Fig. 2 dargestellten Nachrichten sind jeweils nach dem Schema, wie es in Fig. 1 dargestellt ist, modular aufgebaut. Eine einzelne Struktureinheit eines bestimmten Typs kann dabei u. U. in verschiedenen Hierarchieebenen verwendet werden, also sowohl in den Segmenten 1.1 bis 1.5 als auch beispielsweise in den Blöcken 1.1.1 bis 1.1.5.

In Fig. 2 ist der Kausalzusammenhang zwischen mehreren Nachrichten entlang einer Zeitachse 5 dargestellt. Diese Nachrichten lassen sich mittels eines Nachrichtenanalysators zur Analyse zum Beispiel eines zellulären Mobilfunksystems aufzeichnen.

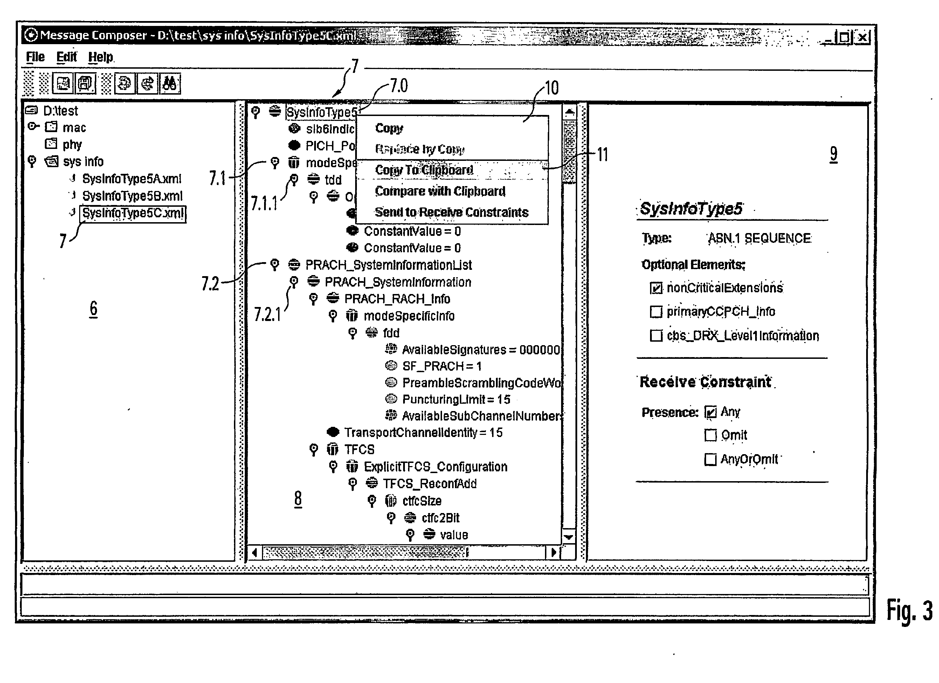

In Fig. 3 ist dargestellt, wie eine Referenznachricht beispielsweise mit Hilfe einer Nachrichtenerzeugungsvorrichtung gewonnen werden kann. In einem ersten Bereich 6 der Bildschirmausgabe der Nachrichtenerzeugungsvorrichtung wird hierzu eine Nachricht 7 markiert. Dies erfolgt beispielsweise durch Anklicken mit einem geeigneten Auswahlmedium, zum Beispiel einer Computermaus. Die Nachricht 7 wird auf Grund der Markierung von der Nachrichtenerzeugungsvorrichtung selektiert und die gesamte Struktur der selektierten Nachricht 7 in einem zweiten Bereich 8 der Bildschirmdarstellung angezeigt.

In diesem zweiten Bereich 8 wird der modulare Aufbau der Nachricht 7 dargestellt, indem jeweils untergeordnete Struktureinheiten eingerückt dargestellt werden. Die unmittelbar der obersten Struktureinheit 7.0 untergeordneten Struktureinheiten sind in der Fig. 3 mit 7.1 und 7.2 bezeichnet und gleich weit eingerückt, um ihre Zugehörigkeit zu derselben Hierarchieebene der Nachricht 7 anzuzeigen. Auf der nächst niedrigeren Hierarchieebene weisen die beiden Struktureinheiten 7.1 und 7.2 jeweils wiederum eine untergeordnete Struktureinheit 7.1.1 bzw. 7.2.1 auf, die wiederum bezüglich ihrer übergeordneten Struktureinheiten 7.1 bzw. 7.2 eingerückt dargestellt sind.

Mit Hilfe des Auswahlmediums kann eine beliebige Struktureinheit, welche in dem zweiten Bereich 8 dargestellt ist, markiert werden. Für die jeweils markierte Struktureinheit, im dargestellten Beispiel die oberste Struktureinheit 7.0, kann wiederum mittels des Auswahlmediums ein Kontextmenü 10 aufgerufen werden. In dem Kontextmenü 10 sind verschiedene Funktionen aufgelistet, die für das markierte und von der Nachrichterzeugungsvorrichtung selektierte Element durchgeführt werden können.

Eine der dargestellten Funktionen ist eine Kopierfunktion 11, mit deren Hilfe die markierte Struktureinheit 7.0 einschließlich aller untergeordneten Struktureinheiten in eine Zwischenablage kopiert wird. Mit Hilfe der Zwischenablage kann damit eine aus der Nachrichterzeugungsvorrichtung entnommene Nachricht 7 für andere Anwendungen verfügbar gemacht werden. So kann beispielsweise die in die Zwischenablage kopierte Nachricht 7 als Referenznachricht zum Ermitteln von Abweichungen einer in einem Endsystem verschickten Endsystem-Nachricht verwendet werden, wie dies nachfolgend bei der Beschreibung eines bevorzugten Ausführungsbeispiels des erfindungsgemäßen Verfahrens erfolgt. In einem dritten Bereich 9 der Bildschirmansicht der Nachrichtenerzeugungsvorrichtung sind zudem für die markierte Struktureinheit 7.0 weitere Funktionen, mit deren Hilfe die Struktureinheit verändert werden kann, angegebenen.

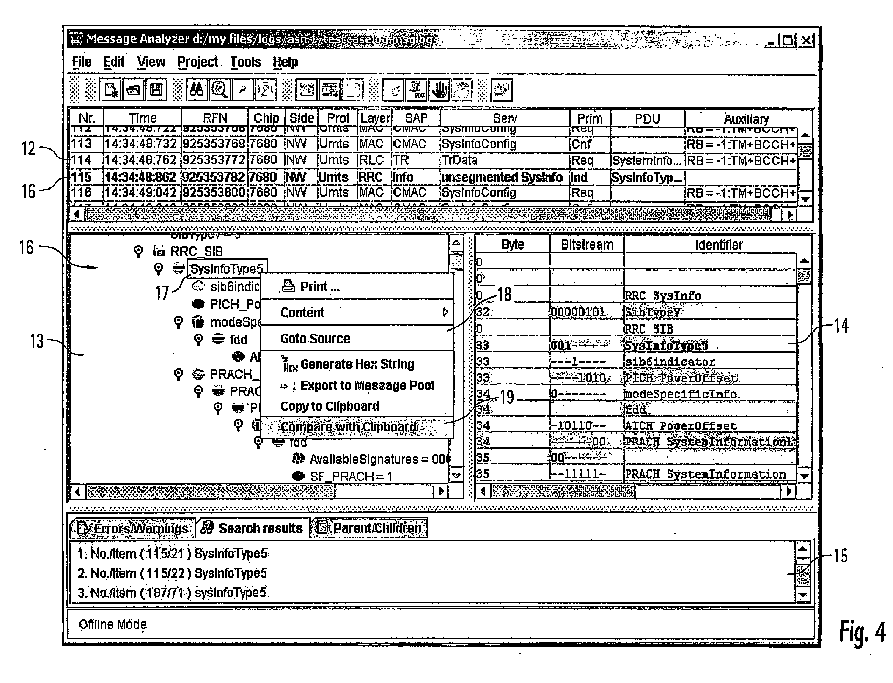

Nachdem mittels der Kopierfunktion 11 der Nachrichtenerzeugungsvorrichtung eine Referenznachricht festgelegt wurde, wird nun, wie dies in der Fig. 4 dargestellt ist, eine von einem Endsystem beispielsweise während eines Testdurchlaufs zwischen den verschiedenen Schichten nach dem OSI-Referenzmodell verschickte Nachricht zur Analyse ausgewählt. Solche bei einem Testdurchlauf verschickten Nachrichten werden beispielsweise in einer sogenannten "Log-Datei" protokolliert, womit eine vollständige Historie der von dem Endsystem verschickten Nachrichten vorhanden ist. Zur Auswertung solcher Nachrichten wird ein Nachrichtenanalysator verwendet, dessen Bildschirmausgabe in der Fig. 4 beispielhaft dargestellt ist.

Die Bildschirmdarstellung des Nachrichtenanalysators gliedert sich in einen ersten Bereich 12, einen zweiten Bereich 13, einen dritten Bereich 14 und einen vierten Bereich 15. In dem ersten Bereich 12 werden alle in der "Log-Datei" protokollierten Nachrichten entsprechend ihrer zeitlichen Generierung durch das Endsystem aufgelistet. Innerhalb des ersten Bereichs 12 kann eine Nachricht wiederum mittels des Auswahlmediums markiert werden, wie dies für eine Nachricht 16 mit der laufenden Nummer 115 dargestellt ist. Die markierte Nachricht 16 wird durch den Nachrichtenanalysator selektiert und die Struktur des modularen Aufbaus der Nachricht 16 in dem zweiten Bereich 13 angezeigt. Die Anzeige der Nachricht 16 in dem zweiten Bereich 13 entspricht dabei in ihrem Aufbau der Anzeige in dem zweiten Bereich 8 der Nachrichtenerzeugungsvorrichtung aus Fig. 3.

Innerhalb der in dem zweiten Bereich 13 angezeigten Nachricht 16 kann wiederum eine beliebige Struktureinheit markiert werden, wobei die markierte Struktureinheit auch diejenige Struktureinheit sein kann, welche auf der obersten Hierarchieebene angeordnet ist, wodurch dann die vollständige Nachricht 16 markiert ist. In dargestellten Ausführungsbeispiel ist eine Struktureinheit 17 markiert, welche einen Teil der gesamten Endsystem-Nachricht 16 bildet. Im Sinne der Erfindung bilden auch solche Teile einer vollständigen Nachricht eine Endsystem-Nachricht bzw. eine Referenznachricht.

Für die in dem zweiten Bereich 13 dargestellte Nachricht 16 werden in dem dritten Bereich 14 die Details für sämtliche Struktureinheiten in Form einer Tabelle dargestellt. Zur leichteren Auswertung durch einen Entwickler wird dabei in der Tabelle diejenige Zeile, welche der markierten Struktureinheit 17 entspricht, in dem dritten Bereich 14 in Fettdruck dargestellt. In dem vierten Bereich 15 sind zusätzliche Informationen dargestellt, die beispielsweise die Beziehung der markierten Nachricht 16 zu einer Elterngeneration von Nachrichten bzw. zu Kindgenerationen von Nachrichten betreffen.

Für die in dem zweiten Bereich 13 markierte Struktureinheit 17, welche durch den Nachrichtenanalysator selektiert ist, ist wiederum ein Kontextmenü 18 aufrufbar. Das Kontextmenü 18 enthält wiederum mehrere Funktionen, die auf die markierte Struktureinheit 17 anwendbar sind. Dies können beispielsweise eine Druckfunktion, eine Exportfunktion oder eine Kopierfunktion für die Zwischenablage sein. Zusätzlich ist in dem Kontextmenü 18 eine Vergleichsfunktion 19 vorgesehen, mit welcher der markierte Teil der Endsystem-Nachricht 16 gegenüber der Referenznachricht 7, die bereits in der Zwischenablage gespeichert ist, hinsichtlich Abweichungen analysiert werden kann.

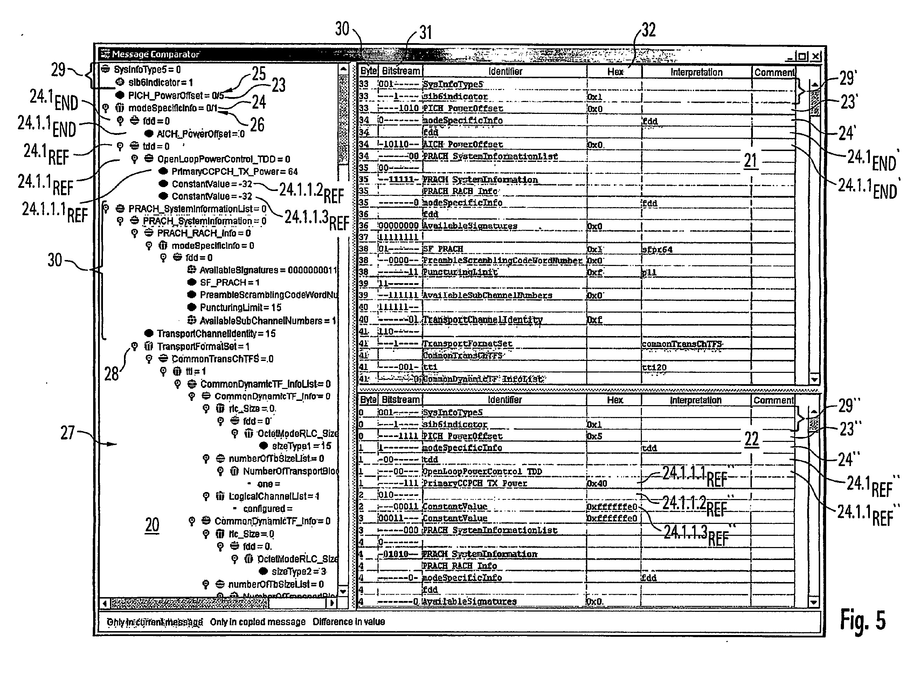

Wird diese Vergleichsfunktion 19 ausgewählt, so wird sowohl für die Referenznachricht 7 aus der Zwischenablage als auch für den Teil der Endsystem-Nachricht 17 zunächst die Struktur ermittelt und damit der modulare Aufbau der beiden Nachrichten bestimmt. Der Teil der Endsystem-Nachricht wird nachfolgend kurz als Endsystem-Nachricht 17 bezeichnet. Die einzelnen Struktureinheiten der beiden Nachrichten werden dann miteinander verglichen und Abweichungen der Struktureinheiten der Endsystem-Nachricht 17 von der Referenznachricht 7 auf einem Bildschirm ausgegeben, wie dies beispielhaft in Fig. 5 gezeigt ist.

Eine Abweichung ergibt sich dabei in dem dargestellten Ausführungsbeispiel für eine erste Struktureinheit 23. Zwar ist diese erste Struktureinheit 23 sowohl in der Referenznachricht 7 als auch in der Endsystem-Nachricht 17 vorhanden, jedoch ist ein Parameter der ersten Struktureinheit 23 jeweils mit einem anderen Wert besetzt. Diese Abweichung zwischen der Struktureinheit 23, wie sie in der Referenznachricht 7 bzw. der Endsystem-Nachricht 17 auftritt, wird in einem ersten Bereich 20 dargestellt.

Hierzu wird die erste Struktureinheit 23 angezeigt und vorzugsweise farbig hervorgehoben. Zusätzlich zu der Darstellung der Struktureinheit 23 wird auch der Wert, der dem Parameter der Struktureinheit 23 zugeordnet ist, sowohl für die Referenznachricht 7 als auch für die Endsystem-Nachricht 17 angezeigt. Im dargestellten Ausführungsbeispiel ist der Wert für die Endsystem-Nachricht 17 "0" und der Wert für die Referenznachricht 7 "5". Beide Werte werden in dem ersten Bereich 20 angezeigt und voneinander durch einen Schrägstrich abgegrenzt, wie dies bei Bezugszeichen 25 zu erkennen ist.

Eine zweite Struktureinheit 24 ist ebenfalls sowohl in der Referenznachricht 7 als auch in der Endsystem-Nachricht 17 vorhanden und unterscheidet sich wiederum in einem dem Parameter der zweiten Struktureinheit 24 zugeordneten Wert. Die jeweils dem Parameter in der Referenznachricht 7 bzw. der Endsystem-Nachricht 7 zugeordneten Werte "0" bzw. "1" sind wiederum durch einen Schrägstrich voneinander getrennt in dem ersten Bereich 20 dargestellt.

Eine weitere Möglichkeit, dass eine Struktureinheit der Endsystem-Nachricht 17 von der Referenznachricht 7 abweicht, besteht darin, dass die betreffende Struktureinheit in der Referenznachricht 7 nicht vorhanden ist. Solche lediglich in der Endsystem-Nachricht 17 vorhandenen Struktureinheiten sind in dem dargestellten Ausführungsbeispiel beispielsweise durch die Struktureinheiten 24.1_{END} und der untergeordneten Struktureinheit 24.1.1_{END} angegebenen. Beide Struktureinheiten 24.1_{END} und 24.1.1_{END} sind wiederum hierarchisch der Struktureinheit 24 der Endsystem-Nachricht untergeordnet.

Um den Zusammenhang zwischen den Abweichungen von Struktureinheiten der Endsystem-Nachricht 17 von der Referenznachricht 7 besser auswerten zu können, ist es vorteilhaft, diejenigen Struktureinheiten der Endsystem-Nachricht 17, welche identisch mit den jeweiligen Struktureinheiten der Referenznachricht 7 sind, ebenfalls in dem ersten Bereich 20 anzuzeigen. Die Darstellung in dem ersten Bereich 20 wird dabei vorzugsweise entsprechend der Darstellung in dem zweiten Bereich 13 des Nachrichtenanalysators in Fig. 4 gewählt. Damit werden der modulare Aufbau und die hierarchische Struktur der Endsystem-Nachricht 17 in dem ersten Bereich 20 durch Einrückungen der hierarchisch untergeordneten Struktureinheiten angezeigt.

In dem dargestellten Ausführungsbeispiel sind weitere Struktureinheiten 27 der Endsystem-Nachricht 17 dargestellt, welche lediglich in der Endsystem-Nachricht 17, nicht aber in der Referenznachricht 7 vorhanden sind. Diese lediglich in der Endsystem-Nachricht 17 vorhandenen Struktureinheiten 24.1_{END}, 24.1.1_{END} sowie 28, mit sämtlichen der Struktureinheit 28 untergeordneten Struktureinheiten, werden vorzugsweise ebenfalls farbig unterlegt, wobei dafür eine Farbe verwendet wird, die sich von der farblichen Darstellung sowohl der ersten Struktureinheiten 23 und der zweiten Struktureinheiten 24 als auch von den übrigen Struktureinheiten unterscheidet.

Bei einer Darstellung der bisher angegebenen Struktureinheiten wird in dem ersten Bereich 20 die vollständige Struktur der Endsystem-Nachricht 17 mit allen darin enthaltenen Struktureinheiten dargestellt. Durch das farbige Unterlegen der einzelnen Struktureinheiten werden dabei die erste Struktureinheit 23 und die zweite Struktureinheit 24, welche sich lediglich inhaltlich von den entsprechenden Struktureinheiten der Referenznachricht 7 unterscheiden, hervorgehoben. Mit einer weiteren Farbe werden zudem diejenigen. Struktureinheiten 24.1_{END}, 24.1.1_{END} und 27 hervorgehoben, welche in der Referenznachricht 7 keine Entsprechung finden. Um auch den Kontext dieser Struktureinheiten erkennen zu können, werden zusätzlich die übrigen Struktureinheiten der Endsystem-Nachricht 17 dargestellt, wobei diese übrigen Struktureinheiten 29 und 30 in identischer Weise eine Entsprechung in der Referenznachricht 7 haben. Mit dieser Ermittlung werden die Auswirkungen von Änderungen an einem Endsystem einer Telekommunikationseinrichtung auf die in dem Endsystem verschickten Nachrichten ermittelt.

Weiterhin kann es auch auftreten, dass Struktureinheiten, welche in der Referenznachricht 7 vorhanden sind, beim Verschicken der Endsystem-Nachricht 17 zwischen den Schichten nach dem OSI-Referenzmodell nicht verwendet werden. Um auch einen solchen Wegfall von Struktureinheiten in dem ersten Bereich 20 angeben zu können, werden diese Struktureinheiten wiederum.von allen übrigen Struktureinheiten unterscheidbar in dem ersten Bereich 20 dargestellt. In dem dargestellten Ausführungsbeispiel sind die Struktureinheit 24.1_{REF} einschließlich ihrer hierarchisch untergeordneten Struktureinheiten 24.1.1_{REF}, 24.1.1.1_{REF}, 24.1.1.2_{REF} und 24.1.1.3_{REF} mit einer weiteren Farbe hinterlegt, um deren ausschließliche Existenz in der Referenznachricht 7 darzustellen. Die Darstellung dieser lediglich in der Referenznachricht 7 vorhandenen Struktureinheiten 24.1_{REF}, 24.1.1_{REF}, 24.1.1.1_{REF}, und deren untergeordneter Struktureinheiten 20.1.1.2_{REF} und 24.1.1.3_{REF} wird dabei an einer Stelle vorgesehen, die die tatsächliche Zuordnung dieser Struktureinheiten bezüglich der übergeordneten Struktureinheit 24 widerspiegelt, die auch in der Referenznachricht 7 vorhanden ist.

Neben dieser Darstellung der Struktur der Nachrichten in dem ersten Bereich 20, ist ein zweiter Bereich 21 vorgesehen, in dem die einzelnen Struktureinheiten der Endsystem-Nachricht 17 tabellarisch aufgeführt sind, wobei zu jeder Struktureinheit Detailinformationen angegebenen sind. Zur Angabe solcher Details der Struktureinheiten sind beispielsweise eine erste Spalte 30 für das der jeweiligen Struktureinheit zugeordnete Byte innerhalb der Nachricht, eine zweite Spalte 31 für die Bitfolge und eine dritte Spalte 32 für den Wert eines Parameters in hexadezimaler Form vorgesehen. Weitere Spalten der Tabelle können zur Angabe des Typs der Struktureinheit, ihrer Interpretation oder für ergänzende Kommentare vorgesehen sein.

Eine entsprechende Darstellung der Struktureinheiten der Referenznachricht 7 erfolgt in dem dritten Bereich 22 ebenfalls in Form einer Tabelle, in der die einzelnen Struktureinheiten zeilenweise eingetragen sind. Für die beiden identisch sowohl in der Endsystem-Nachricht 17 als auch in der Referenznachricht 7 vorhandenen Struktureinheiten 29 befindet sich daher sowohl in dem zweiten Bereich 21 als auch in dem dritten Bereich 22 ein Eintrag in den Zeilen 29' bzw. 29". Die Einträge in den Zeilen 29' und 29" sind dabei identisch, mit Ausnahme der Angabe des Bytes innerhalb der Nachricht. Die unterschiedliche Positionierung innerhalb der Nachricht ist eine Folge davon, dass die zur Auswertung herangezogene Referenznachricht 7 eine vollständige Nachricht ist, weswegen der erste Eintrag mit Bytenummer "0" startet, die verwendete Endsystem-Nachricht 17 jedoch ein Teil einer vollständigen Nachricht ist, wobei das erste Byte der zugrundeliegenden vollständigen Endsystem-Nachricht 17 das Byte mit der Nummer 33 ist.

Die in beiden Nachrichten vorhandenen Struktureinheiten 23 und 24 sind in den Zeilen 23' und 23'' bzw. 24' und 24'' in dem zweiten Bereich 21 und dem dritten Bereich 22 detailliert wiedergegeben. Der jeweilige Unterschied der ersten Struktureinheit 23 bzw. der zweiten Struktureinheit 24, wie er bereits in dem ersten Bereich 20 bei Bezugszeichen 25 bzw. 26 angegebenen ist, ist auch in dem zweiten Bereich 21 bzw. dem dritten Bereich 22 dargestellt. Die erste Struktureinheit 23 unterscheidet sich dabei, wie es in der Zeile 23' bzw. 23" angegebenen ist, in ihrem in der dritten Spalte 32 angegebenen Hexadezimalwert für den Parameter. Die zweite Struktureinheit 24 unterscheidet sich dagegen, wie dies in der Zeile 24' bzw. 24" gezeigt ist, in der Bitfolge, die in der zweiten Spalte 31 angegebenen ist.

Für die lediglich in der Endsystem-Nachricht 17 vorhandenen Struktureinheiten 24.1_{END} und deren untergeordnete Struktureinheit 24.1.1_{END} sind dementsprechend die Zeilen 24.1_{END}' und 20.1.1_{END}' lediglich in dem zweiten Bereich 21 vorhanden, in dem nur die Struktureinheiten der Endsystem-Nachricht 17 dargestellt sind. Umgekehrt werden die Struktureinheit 24.1_{REF} mit ihren untergeordneten Struktureinheiten einschließlich der Struktureinheit 24.1.1.3_{REF} in den entsprechenden Zeilen 24.1_{REF}'' bis 20.1.1.3 _{REF} ausschließlich in dem dritten Bereich 22 dargestellt. Im Anschluss an die Zeilen 24.1.1_{END}' in dem zweiten Bereich 21 bzw. die Zeile 24.1.1.3 _{REF} '' werden die weiteren identisch vorhandenen Struktureinheiten 30 sowohl für die Referenznachricht 7 als auch für die Endsystem-Nachricht 17 dargestellt. Auf eine explizite Angabe in der Fig. 5 hierzu wird aus Gründen der besseren Übersichtlichkeit verzichtet. Eine den Farbmarkierungen des ersten Bereichs 20 entsprechende Markierung der jeweiligen Struktureinheiten erfolgt auch in dem zweiten Bereich 21 und dem dritten Bereich 22.

An Stelle der in dem bevorzugten Ausführungsbeispiel erläuterten farbigen Markierungen durch entsprechende Hinterlegung in der Bildschirmdarstellung, können selbstverständlich auch andere grafische Unterscheidungsmöglichkeiten eingesetzt werden. Beispiele hierfür sind eine kursive Darstellung, Fettdruck oder Unterstreichung oder ähnliches.

## Patentansprüche

1. Verfahren zur Ermittlung von Abweichungen einer in einem hierarchisch aufgebauten Endsystem einer Telekommunikationseinrichtung erzeugten, modular aufgebauten Endsystem-Nachricht (17) von einer Referenznachricht (7) mit folgenden Verfahrensschritten:
- Einlesen einer Referenznachricht (7),
- Einlesen einer in dem Endsystem erzeugten Endsystem-Nachricht (17),
- Durchführen einer Nachrichtenstrukturanalyse der Referenznachricht (7),
- Durchführen einer Nachrichtenstrukturanalyse der erzeugten Endsystem-Nachricht (17),
- Darstellen der gesamten Nachrichtenstruktur der Referenznachricht (7) und der Endsystem-Nachricht (17),
- Markieren einer beliebigen dargestellten Struktureinheit der Referenznachricht (7),
- Markieren einer beliebigen dargestellten Struktureinheit der Endsystem-Nachricht (17),
- Ermitteln von Abweichungen des markierten Teils der Endsystem-Nachricht (17) von dem markierten Teil der Referenznachricht (7), und
- Ausgeben von gegenüber dem markierten Teil der Referenznachricht (7) abweichenden Struktureinheiten (23, 24, 24.1END, 24.1.1END, 28) der in dem Endsystem erzeugten Endsystem-Nachricht (17) in eine ersten Bereich (20) einer Bildschirmdarstellung, **dadurch gekennzeichnet, dass** in einem zweiten Bereich (21) die Struktureinheiten (23, 24, 24.1END, 24.1.1END, 27, 29, 30) der Endsystem-Nachricht (17) mit einer Angabe von Details für sämtliche Struktureinheiten der Endsystem-Nachricht (17) in Form einer Tabelle dargestellt werden und in einem dritten Bereich (22) die Struktureinheiten (23, 24, 24.1REF, 24.1.1REF, 24.1.1.1REF, 24.1.1.2REF, 24.1.1.3REF, 29, 30) der Referenznachricht (7) mit einer Angabe von Details für sämtliche Struktureinheiten der Referenznachricht (7) in Form einer Tabelle dargestellt werden und in dem zweiten bzw. dritten Bereich (21, 22) jeweils das einer Struktureinheit zugeordnete Byte innerhalb der Endsystem-Nachricht (17) bzw. der Referenznachricht (7) angegeben wird.

2. Verfahren nach Anspruch 1,
**dadurch gekennzeichnet,**
**dass** zusätzlich identische Struktureinheiten (29, 30) der Referenznachricht (7) und der in dem Endsystem erzeugten Endsystem-Nachricht, (17) ausgegeben werden, wobei die von der Referenznachricht (17) abweichenden Struktureinheiten (23, 24, 24.1END, 24.1.1END, 28) der Endsystem-Nachricht (17) grafisch unterscheidbar von den identischen Struktureinheiten (29, 30) ausgegeben werden.

3. Verfahren nach Anspruch 1 oder 2,
**dadurch gekennzeichnet,**
**dass** zusätzlich nur in der Referenznachricht (7) vorhandene Struktureinheiten (24.1REF, 24.1.1REF, 24.1.1.1REF, 24.1.1.2REF, 24.1.1.3REF) grafisch von den übrigen Struktureinheiten unterscheidbar dargestellt werden.

4. Verfahren nach einem der Ansprüche 1 bis 3,
**dadurch gekennzeichnet,**
**dass** nur in der erzeugten Endsystem-Nachricht (17) vorhandene Struktureinheiten (24.1END, 24.1.1END) grafisch unterscheidbar von den übrigen Struktureinheiten dargestellt werden.

5. Verfahren nach einem der Ansprüche 1 bis 4,
**dadurch gekennzeichnet,**
**dass** die Struktureinheiten (23, 24, 24.1END, 24.1.1END, 24.1REF, 24.1.1REF, 24.1.1.1REF, 24.1.1.2REF, 24.1.1.3REF, 27, 29, 30) zumindest der Endsystem-Nachricht (17) entsprechend dem modularen Aufbau dargestellt werden.

6. Verfahren nach einem der Ansprüche 1 bis 5,
**dadurch gekennzeichnet,**
**dass** die von der Referenznachricht (7) abweichenden Struktureinheiten (23, 24, 24.1END, 24.1.1END, 27) unterscheidbar von den übrigen Struktureinheiten des zweiten Bereichs (21) dargestellt werden.

7. Verfahren nach einem der Ansprüche 1 bis 6,
**dadurch gekennzeichnet,**
**dass** die von der Endsystem-Nachricht (17) abweichenden Struktureinheiten (23, 24, 24.1REF, 24.1.1REF, 24.1.1.1REF, 24.1.1.2REF, 24.1.1.3REF) unterscheidbar von den übrigen Struktureinheiten des dritten Bereichs (22) dargestellt werden.

8. Computerprogramm mit Programmcode-Mitteln, um alle Schritte gemäß einem der Ansprüche 1 bis 7 durchführen zu können, wenn das Programm auf einem Computer oder einem digitalen Signalprozessor ausgeführt wird.

9. Computerprogramm-Produkt mit auf einem maschinenlesbaren Datenträger gespeicherten Programmcode-Mitteln, um alle Schritte gemäß einem der Ansprüche 1 bis 7 durchführen zu können, wenn das Programm auf einem Computer oder einem digitalen Signalprozessor ausgeführt wird.

## Claims

1. Method for determining deviations of a modularly constructed end-system message (17), generated in a hierarchically constructed end-system of a telecommunication facility, from a reference message (7), with the following procedural steps:
• Reading in of a reference message (7)
• Reading in of an end-system message (17) generated in the end-system,
• Execution of a message structure analysis of the reference message (7),
• Execution of a message structure analysis of the generated end-system message (17),
• Display of the overall message structure of the reference message (7) and the end-system message (17),
• Marking of any displayed structure unit of reference message (7),
• Marking of any displayed structure unit of end-system message (17),
• Determination of deviations of the marked part of the end-system message (17) from the marked part of the reference message (7), and
• Output of structure units (23,24, 24.1END, 24.1.1END, 28) of the end-system message (17) generated in the end-system which differ from the marked part of the reference message (7), in a first area (20) of a screen display, **characterized in that** in a second area (21) the structure units (23, 24, 24.1END, 24.1.1END, 27, 29, 30) of the end-system message (17) are shown giving details for all structure units of the end-system message (17) in the form of a table and in a third area (22) the structure units (23, 24, 24.1REF, 24.1.1REF, 24.1.1.1REF, 24.1.1.2REF, 24.1.1.3REF, 29, 30) of the reference message (7) are shown giving details for all structure units of the reference message (7) in the form of a table, and in the second and third area (21, 22) in each case the byte assigned to a structure unit within the end-system message (17) or reference message (7) respectively is given.

2. Method according to Claim 1, **characterized in that** additionally identical structure units (29, 30) of the reference message (7) and of the end-system message (17) generated in the end-system are output, the structure units (23, 24, 24.1END, 24.1.1END, 28) of the end-system message (17) differing from the reference message (17) being output in a form graphically distinguishable from the identical structure units (29, 30).

3. Method according to Claim 1 or 2, **characterized in that** structure units (24.1REF, 24.1.1REF, 24.1.1.1REF, 24.1.1.2REF, 24.1.1.3REF) which are only present in the reference message (7) are additionally shown in a form graphically distinguishable from the other structure units.

4. Method according to one of Claims 1 to 3, **characterized in that** structure units (24.1END, 24.1.1END) which are only present in the generated end-system message (17) are shown in a form graphically distinguishable from the other structure units.

5. Method according to one of Claims 1 to 4, **characterized in that** the structure units (23, 24, 24.1END, 24.1.1END, 24.1REF, 24.1.1REF, 24.1.1.1REF, 24.1.1.2REF, 24.1.1.3REF, 27, 29, 30) at least of the end-system message (17) are represented according to the modular structure.

6. Method according to one of Claims 1 to 5, **characterized in that** the structure units (23, 24, 24.1END, 24.1.1END, 27) differing from the reference message (7) are represented in a form distinguishable from the other structure units of the second area (21).

7. Method according to one of Claims 1 to 6, **characterized in that** the structure units (23, 24, 24.1REF, 24.1.1REF, 24.1.1.1REF, 24.1.1.2REF, 24.1.1.3REF) differing from the end-system message (17) are represented in a form distinguishable from the other structure units of the third area (22).

8. Computer program with program code means to be able to execute all steps according to one of Claims 1 to 7, if the program is run on a computer or a digital signal processor.

9. Computer program product with program code means, stored on a machine-readable data carrier, to be able to execute all steps according to one of Claims 1 to 7, if the program is run on a computer or a digital signal processor.

## Revendications

1. Procédé permettant de déterminer des différences entre un message de système d'extrémité (17) ayant un agencement modulaire, généré dans un système d'extrémité ayant un agencement hiérarchique d'une installation de télécommunication et un message de référence (7) avec les étapes de procédé suivantes :
- lire un message de référence (7),
- lire un message de système d'extrémité (17) généré dans le système d'extrémité,
- exécuter une analyse de structure de message pour le message de référence (7),
- exécuter une analyse de structure de message pour le message de système d'extrémité généré (17),
- représenter toute la structure de message pour le message de référence (7) et pour le message de système d'extrémité (17),
- marquer une unité de structure quelconque représentée du message de référence (7),
- marquer une unité de structure quelconque représentée du message de système d'extrémité (17),
- déterminer des différences entre la partie marquée du message de système d'extrémité (17) et la partie marquée du message de référence (7), et
- afficher des unités de structure différentes (23, 24, 24.1END, 24. 1. 1 END, 28) du message de système d'extrémité (17) généré dans le système d'extrémité en face de la partie marquée du message de référence (7) dans une première zone (20) d'un affichage sur un écran, **caractérisé en ce que**, dans une deuxième zone (21), les unités de structure (23, 24, 24.1END, 24.1.1END, 27, 29, 30) du message de système d'extrémité (17) sont représentées avec une indication de détails pour toutes les unités de structure du message de système d'extrémité (17) sous forme d'un tableau et **en ce que**, dans une troisième zone (22), les unités de structure (23, 24, 24.1REF, 24.1.1REF, 24.1.1.1REF, 24.1.1.2REF, 24.1.1.3REF, 29, 30) du message de référence (7) sont représentées avec une indication de détails pour toutes les unités de structure du message de référence (7) sous forme d'un tableau et **en ce que**, dans la deuxième respectivement la troisième zone (21, 22), chaque octet associé à une unité de structure à l'intérieur du message de système d'extrémité (17) respectivement du message de référence (7) est indiqué.

2. Procédé selon la revendication 1,
**caractérisé en ce que**,
des unités de structure identiques supplémentaires (29, 30) du message de référence (7) et du message de système d'extrémité (17) généré dans le système d'extrémité sont affichées, moyennant quoi les unités de structure (23, 24, 24. 1 END, 24.1.1END, 28) du message de système d'extrémité (17) différentes du message de référence (17) sont affichées graphiquement d'une manière distinguable des unités de structure identiques (29, 30).

3. Procédé selon la revendication 1 ou 2,
**caractérisé en ce que**,
en plus seules des unités de structure (24.1REF, 24.1.1REF, 24.1.1.1REF, 24.1.1.2REF, 24.1.1.3REF) présentes dans le message de référence (7) sont représentées graphiquement d'une manière distinguable des unités de structure usuelles.

4. Procédé selon l'une des revendications 1 à 3,
**caractérisé en ce que**,
seules des unités de structure (24. 1 END, 24. 1. 1 END) présentes dans le message de système d'extrémité généré (17) sont représentées graphiquement d'une manière distinguable des unités de structure usuelles.

5. Procédé selon l'une des revendications 1 à 4,
**caractérisé en ce que**,
les unités de structure (23, 24, 24.1END, 24.1.1 END, 24.1REF, 24.1.1REF, 24.1.1.1REF, 24.1.1.2REF, 24.1.1.3REF, 27, 29, 30) au moins du message de système d'extrémité (17) sont représentées selon l'agencement modulaire.

6. Procédé selon l'une des revendications 1 à 5,
**caractérisé en ce que**,
les unités de structure (23, 24, 24.1END, 24.1.1END, 27) différentes du message de référence (7) sont représentées de manière distinguable des unités de structure restantes de la deuxième zone (21).

7. Procédé selon l'une des revendications 1 à 6,
**caractérisé en ce que**,
les unités de structure (23, 24, 24.1REF, 24.1.1REF, 24.1.1.1REF, 24.1.1.2REF, 24.1.1.3REF) différentes du message de système d'extrémité (17) sont représentées d'une manière distinguable des unités de structure restantes de la troisième zone (22).

8. Programme d'ordinateur avec des moyens de code de programme afin de pouvoir exécuter toutes les étapes selon une des revendications 1 à 7 lorsque le programme est exécuté sur un ordinateur ou un processeur de signaux numériques.

9. Produit de programme d'ordinateur avec des moyens de code de programme enregistrés sur un support de données lisible par une machine afin de pouvoir exécuter toutes les étapes selon une des revendications 1 à 7 lorsque le programme est exécuté sur un ordinateur ou un processeur de signaux numériques.
